# EUROPÄISCHE PATENTSCHRIFT

(11) **EP 1 317 698 B1**
(45) Veröffentlichungstag und Bekanntmachung des Hinweises auf die Patenterteilung: **26.01.2005**
(21) Anmeldenummer: 01969269.8
(22) Anmeldetag: 03.09.2001
(51) Int. Cl.: G05B 23/02

(54) **ANLAGE MIT EINEM PROZESSELEMENT MIT BILDSCHIRM MIT EINEM AKTIVIERUNGSELEMENT ZUR FERNGESTEUERTEN AUFHEBUNG DER BILDSCHIRMSCHONFUNKTION SOWIE AKTIVIERUNGSELEMENT FÜR EINE DERARTIGE ANLAGE**
SYSTEM WITH A PROCESS ELEMENT PROVIDED WITH A SCREEN WITH AN ACTIVATING ELEMENT FOR REMOTE-CONTROLLED CANCELLATION OF THE SCREEN SAVER FUNCTION AND AN ACTIVATING ELEMENT FOR SAID SYSTEM
INSTALLATION DOTEE D'UN ELEMENT DE REALISATION DE PROCESSUS POURVU D'UN ECRAN AVEC UN ELEMENT D'ACTIVATION POUR L'ANNULATION COMMANDEE A DISTANCE DE LA FONCTION D'ECONOMISEUR D'ECRAN, ET ELEMENT D'ACTIVATION POUR UNE TELLE INSTALLATION

(30) Priorität: 13.09.2000 DE 10045198
(43) Veröffentlichungstag der Anmeldung: 11.06.2003
(73) Patentinhaber: SIEMENS AKTIENGESELLSCHAFT, 80333 München (DE)
(72) Erfinder: KNEPPER, Achim, 91126 Schwabach (DE)
(86) Internationale Anmeldenummer: PCT/DE2001/003365
(87) Internationale Veröffentlichungsnummer: WO 2002/023295

(56) Entgegenhaltungen:
- EP-A- 0 389 132
- EP-A- 0 908 805
- EP-A- 0 927 985
- DE-A- 19 842 946
- GB-A- 2 313 924
- US-A- 4 413 314

## Beschreibung

Anlage mit einem Prozesselement mit Bildschirm mit einem Aktivierungselement zur ferngesteuerten Aufhebung der Bildschirmschonfunktion sowie Aktivierungselement für eine derartige Anlage

Die Erfindung betrifft eine Anlage mit mindestens einem Prozesselement mit den Merkmalen des Oberbegriffs des Patentanspruchs 1. Ferner betrifft die Erfindung ein Aktivierungselement für eine derartige Anlage.

Als Stand der Technik sind Prozesselemente, z.B. Geräte, Maschinen oder Prozessanlagen bekannt, welche Bildschirme zur Anzeige von Zustands-/Betriebsdaten aufweisen. Zur Überwachung der insbesondere automatisch gesteuerten Tätigkeit. derartiger Prozesselemente ist es z.B. im Bereich der Petrochemie oder Brauereitechnik bekannt, dass diese oftmals in weitläufigen Arealen angeordneten Prozesselemente von Bedienern aufgesucht werden, um die an den jeweiligen Bildschirmen angezeigten Zustands-/Betriebsdaten auf Störmeldungenzu überprüfen. Falls Störmeldungen vorliegen, kann der Bediener entsprechende Korrekturmaßnahmen veranlassen. Um die verwendeten Bildschirme zu schonen und deren Lebensdauer zu erhöhen, ist es bekannt, die Anzeige der Bildschirme durch Bildschirmschonfunktionen nach einer einstellbaren Zeitdauer zu deaktivieren.

Üblicherweise muss der Bediener nun bei jedem einzelnen zu überwachenden Bildschirm die aktive Bildschirmschonfunktion z.B. durch Drücken eines Schalters unterbrechen, um eine erneute Anzeige der Zustands-/Betriebsdaten zu erhalten und feststellen zu können, ob ein fehlerfreier Betriebszustand vorliegt. Wenn eine größere Anzahl von Bildschirmen in einem weitläufigen Areal angeordnet ist, fällt hierfür ein nicht unerheblicher Zeitaufwand für den Bediener an.

Beim Auftreten einer Störmeldung ist es bereits bekannt, die Unterbrechung der Anzeige des Bildschirms durch eine der geschilderten Bildschirmschonfunktionen für eine bestimmte Zeit aufzuheben, um auf die Störmeldung hinzuweisen. Üblicherweise wird aber eine derartige Aussetzung beim Vorliegen von Störmeldungen auch zur Bildschirmschonung zeitlich befristet, so dass der Bediener immer wieder zur zuverlässigen Feststellung des Vorliegens einer Störmeldung die Aufhebung der Bildschirmfunktion am jeweiligen Bildschirm einleiten muss.

Aus der EP-A-0 389 132 ist ein Steuerungssystem mit Anzeigeeinheit für eine Industrieanlage bekannt. Dabei wird z.B. die Farbe der Bildschirmanzeige auf der Anzeigeeinheit entsprechend den Zustands- oder Betriebsdaten eines Prozesselementes modifiziert. Weiterhin ist aus der EP-A-0 927 985 eine Vorrichtung bekannt, bei der abhängig von der Verweildauer einer Person vor einem Fernsehschirm die darauf ausgegebene Art und Dichte von Werbung gesteuert wird. Schließlich ist es aus der Veröffentlichung mit dem Titel "Fehlerdiagnose mit Bildschirm - Textangabe an Sonder - Werkzeugmaschinen" von Dr. Peter Jung, veröffentlicht in Werkstatt und Betrieb 115 (1982), Seiten 365 und 366 bekannt, die einem störungsfreien Betrieb zugeordnete Bildschirmanzeige bei Auftreten eines Fehlers zu löschen und durch eine Fehlermeldung zu ersetzen.

Der Erfindung liegt die Aufgabe zugrunde, eine Anlage mit mindestens einem Prozesselement mit Bildschirm und ein Aktivierungselement für eine derartige Anlage anzubieten, womit für einen Bediener eine zeitsparende und komfortable Aufhebung der Bildschirmschonfunktion des Bildschirms eines Prozesselements ermöglicht wird.

Diese Aufgabe wird für die Anlage durch die Merkmale des Patentanspruchs 1 gelöst. Vorteilhafte Ausführungsformen der Anlage werden in den Unteransprüchen 2 - 12 beschrieben.

Bei der erfindungsgemäßen Anlage ist ein Aktivierungselement zur ferngesteuerten Aufhebung der Bildschirmschonfunktion des Bildschirms des Prozesselements vorgesehen. Dabei sind unter einem Prozesselement z.B. Geräte, Maschinen und/oder Aggregate und insbesondere Prozessanlagen z.B. im Bereich der Petrochemie oder Brauereitechnik zu verstehen, welche im wesentlichen selbsttätig arbeiten.

Derartige Prozesselemente oder Prozessanlagen werden üblicherweise in bestimmten Abständen von einem Bediener aufgesucht, wobei die Bildschirmanzeige mit den angezeigten Zustands-/Betriebsdaten auf Störmeldungen untersucht wird. Bei der Anzeige von Störmeldungen werden von der Bediener geeignete Maßnahmen ergriffen und wird die Anlage z.B. abgeschaltet, bis die Störung gefunden und beseitigt worden ist.

Die Bildschirme bzw. allgemein Anzeigeelemente dieser Prozesselemente können z.B. als Röhrenelemente oder LCD-Displays ausgebildet sein. Bei Röhrenelementen sind Bildschirmschoner bekannt, welche die Anzeige des Bildschirms nach einer bestimmten Zeitdauer unterbrechen. Für LCD-Displays kann zur Bildschirmschonung die Hintergrundbeleuchtung nach einer zeitlichen Verzögerung abgeschaltet werden.

Bei der erfindungsgemäßen Anlage ist weiterhin ein Aktivierungselement zur ferngesteuerten Aufhebung der Bildschirmschonfunktion vorgesehen. Dieses weist einen Erfassungsbereich auf und wird dann aktiv, wenn eine Person im Erfassungsbereich detektiert wird. Ein Bediener kann also z.B. durch Betreten des Areals, in dem die jeweiligen Prozesselemente angeordnet sind, eine Aktivierung des Aktivierungselements und damit eine Aufhebung der Bildschirmschonfunktion sämtlicher Bildschirme erreichen.

Im Gegensatz zum Stand der Technik muss damit nicht mehr die Aufhebung der Bildschirmschonfunktion der einzelnen Bildschirme an den jeweiligen Bildschirmen durchgeführt werden.

Wenn mehrere Bildschirme vorgesehen sind, kann über ein Aktivierungselement auch eine Aufhebung der Bildschirmschonfunktion mehrerer Bildschirme stattfinden. Damit können z.B. sämtliche Bildschirme, die in Blickweite des Bedieners liegen, wieder aktiviert werden, wobei der Bediener mit einem Blick feststellen kann, ob Störmeldungen an den Bildschirmen und damit an den Prozesselementen vorhanden sind. Die Aufhebung der Bildschirmschonfunktionen kann auch zeitlich versetzt für einzelne Bildschirme oder Bildschirmgruppen stattfinden.

Wenn mehrere Prozesselemente oder eine gesamte Prozessanlage von der Bediener zu überwachen sind, kann z.B. ein Aktivierungselement angeschaltet werden, wenn die Bediener das Prozessareal betritt. In einer weitläufigen Prozessanlage können auch mehrere Aktivierungselemente vorhanden sein, so dass ein Bediener, der auf einem Fahrzeug, z.B. einem Fahrrad, unterwegs ist und die jeweiligen Prozesselemente nach und nach aufsucht, auch mehrere Aktivierungselemente passiert, wobei dann die jeweiligen Gruppen von Bildschirmen vom jeweils zugeordneten Aktivierungselement angesprochen und die Bildschirmschonfunktionen gruppenweise aufgehoben werden.

Das Aktivierungselement wird erfindungsgemäß von einem Bediener beim Betreten oder Passieren des jeweiligen Prozessareals betätigt. Das Aktivierungselement kann somit besonders vorteilhaft als Trittmatte gestaltet sein, wobei beim Überfahren oder Betreten der Trittmatte eine ferngesteuerte Aktivierung erfolgt.

In einer weiteren Ausführungsform kann das Aktivierungselement auch als Bewegungsmelder ausgebildet sein und Erscheinen des Bedieners aktiviert werden. Ferner kann das Aktivierungselement bevorzugt auch sowohl als Trittmatte und/oder Bewegungsmelder ausgebildet sein, um eine besonders zuverlässige Aktivierung zu erreichen.

Gemäß einer weiteren vorteilhaften Ausführungsform ist das Aktivierungselement absperrbar, so dass eine Aktivierung nur beim Eingeben eines entsprechenden Schlüssels durch einen autorisierten Bediener stattfindet. Dieser Schlüssel kann als mechanischer oder als elektronischer Schlüssel (z.B. durch Codeeingabe) realisiert werden.

Insbesondere bei einem weitläufigerem Prozessareal kann das Aktivierungselement über eine Funkverbindung mit dem oder den Prozesselement(en) verbunden sein. Alternativ oder ergänzend kann eine Drahtverbindung vorgesehen sein. Über die vorliegende drahtgebundene oder drahtlose Verbindung kann das Aktivierungselement Informationssignale mit dem oder den Prozesselement(en) austauschen. Insbesondere erfolgt eine Kommunikation mit den Bildschirmen zugeordneten Schaltelementen (z.B. einem Rechner) der Prozesselemente.

Hierbei kann eine Kommunikation zwischen dem Aktivierungselement und einem oder mehreren Rechnern, die den Prozesselementen zur Bildschirmsteuerung zugeordnet sind, erfolgen. Das Aktivierungselement kann auch mit einer speicherprogrammierbaren Steuerung eines Prozesselements zur Bildschirmansteuerung verbunden sein.

Vorteilhafterweise kann ein Deaktivierungselement vorhanden sein, über welches der Bediener z.B. beim Verlassen des Prozessareals die Bildschirmschonfunktionen der Bildschirme wieder aktiviert. Ein derartiges Deaktivierungselement kann wie das beschriebene Aktivierungselement sämtliche Merkmale gemäß den Patentansprüchen 2 bis 12 besitzen.

Das erfindungsgemäße Aktivierungselement gemäß Patentanspruch 13 ermöglicht eine besonders komfortable Aufhebung der Bildschirmschonfunktion der Prozesselemente für einen Bediener.

Die Erfindung ist anhand eines Ausführungsbeispiels in der Zeichnungsfigur näher erläutert.

In der Zeichnungsfigur ist eine Anlage mit Prozesselementen 1a - 1f abgebildet, welche zur Realisierung von Prozessabläufen, z.B. von chemischen oder fertigungstechnischen Vorgängen insbesondere automatisch gesteuert miteinander verkettet sind. Zur Überwachung dieser Prozesselemente 1a - 1f betritt die Bediener den Prozessraum 2, z.B. eine Fabrikationshalle, durch einen Eingang 3. An den Prozesselementen 1a - 1f sind Bildschirme 4a - 4f zur Anzeige von Zustands-/Betriebsdaten der Prozesselemente 1a - 1f angebracht. Durch die beschriebenen Bildschirmschonfunktionen wird die Anzeige einzelner oder sämtlicher Bildschirme 4a - 4f nach einer einstellbaren zeitlichen Verzögerung unterbrochen. Wenn die Bediener den Prozessraum 2 durch den Eingang 3 betritt, wird das Aktivierungselement 5, welches z.B. als Bewegungsmelder ausgebildet ist, betätigt. Damit werden die Bildschirmschonfunktionen der Bildschirme 4a - 4f ferngesteuert aufgehoben und der Bediener kann mit einem Blick erkennen, ob an den Bildschirmen 4a - 4f Störmeldungen vorliegen. Im Prozessraum 2 können auch mehrere, in den Figuren nicht abgebildete, Aktivierungselemente 5 an verschiedenen Stationen des Weges des Bedieners beim Durchlaufen des Prozessraums 2 vorgesehen sein.

Wenn der Bediener den Prozessraum 2 durchquert, kann ein Deaktivierungselement 7 vorgesehen sein, welches zur ferngesteuerten erneuten Aktivierung der Bildschirmschonfunktionen der Bildschirme 4d - 4f dient. Dies geschieht dann, wenn der Bediener nach erfolgter Kontrolle der Bildschirme 4d - 4f das Deaktivierungselement 7 vor dem Verlassen des Prozessraums 2 durch den Ausgang 8 betätigt oder in den Erfassungsbereich des als Bewegungsmelder oder Trittmatte ausgebildeten Deaktivierungselements 7 eintritt. Wenn kein Deaktivierungselement 7 vorgesehen ist, kann auch nach Betätigung des Aktivierungselements 5 eine Aufhebung der Unterbrechung der Bildschirmschonfunktion der Bildschirme 4a - 4f oder einzelner Bildschirme oder Bildschirmgruppen für eine einstellbare Zeitspann erfolgen, bis der Bediener voraussichtlich den Prozessraum 2 durchlaufen oder durchfahren hat.

Das Aktivierungselement 5 kann über das Schaltelement 6 mit den Bildschirmen 4a - 4f verbunden sein. Durch dieses Schaltelement 6 können die Bildschirme 4a - 4f zeitlich versetzt angesteuert werden, so dass eine zeitlich versetzte und aufeinander folgende Aufhebung der Bildschirmschonfunktionen der Bildschirme 4a - 4f stattfindet. Bei einer bekannten Fortbewegungsgeschwindigkeit des Bedieners beim Durchlaufen oder Durchfahren des Prozessraums 2 werden die Bildschirme 4a - 4f nacheinander wieder aktiviert, und zwar immer dann, wenn der Bediener die jeweiligen Bildschirme erreicht hat oder sich in deren Blickweite befindet. Über ein derartiges Schaltelement 6 kann auch die Dauer der zeitlichen Versetzung der Aufhebung der Bildschirmschonfunktionen der Bildschirme 4a - 4f eingestellt werden.

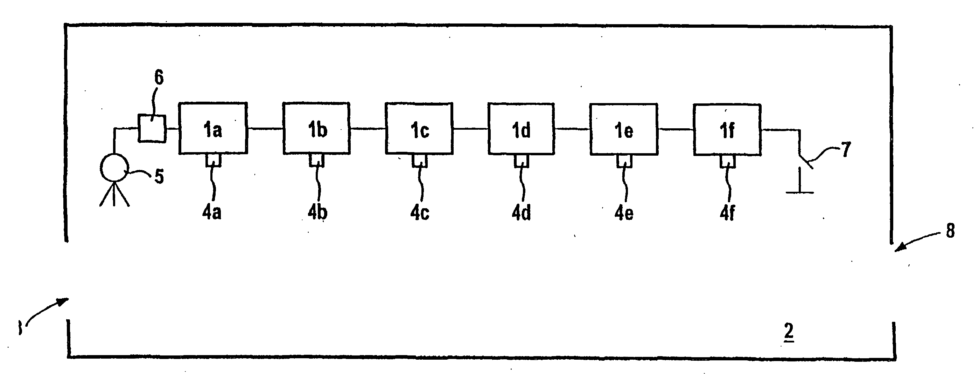

## Patentansprüche

1. Anlage mit mindestens einem automatisch gesteuerten Prozesselement, insbesondere automatisch gesteuerte Prozessanlage, mit mindestens einem Bildschirm zur Anzeige von Zustandsoder Betriebsdaten des Prozesselements, wobei die Anzeige des mindestens einen Bildschirms durch eine Bildschirmschonfunktion zeitweise unterbrochen wird,
**dadurch gekennzeichnet, dass**
ein Aktivierungselement (5) zur ferngesteuerten Aufhebung der Bildschirmschonfunktion des mindestens einen, dem Aktivierungselement zugeordneten Bildschirms vorgesehen ist, wobei das Aktivierungselement einen Erfassungsbereich aufweist und dann aktiv wird, wenn eine Person im Erfassungsbereich detektiert wird.

2. Anlage nach Anspruch 1,
**dadurch gekennzeichnet, dass** mehrere
Bildschirme vorgesehen sind und ein Aktivierungselement (5) zur Aufhebung der Bildschirmschonfunktionen mehrerer Bildschirme (4) vorgesehen ist.

3. Anlage nach Anspruch 2,
**dadurch gekennzeichnet, dass** ein Aktivierungselement (5) zur zeitlich versetzten Aufhebung der Bildschirmschonfunktionen mehrerer Bildschirme (4) vorgesehen ist.

4. Anlage nach einem der Ansprüche 2 oder 3,
**dadurch gekennzeichnet, dass** ein mit dem Aktivierungselement (5) verbundenes Schaltelement (6) z.B. zur Festlegung der Anzahl der Bildschirme (4), deren Bildschirmschonfunktion aufgehoben wird, vorgesehen ist.

5. Anlage nach einem der vorhergehenden Ansprüche,
**dadurch gekennzeichnet, dass** mehrere Aktivierungselemente (5) vorgesehen ist.

6. Anlage nach Anspruch 5,
**dadurch gekennzeichnet, dass** mehrere Aktivierungselemente (5) zur Aufhebung der Bildschirmschonfunktionen von zu Gruppen zusammengefassten Bildschirmen (4) vorgesehen sind.

7. Anlage nach einem der vorhergehenden Ansprüche,
**dadurch gekennzeichnet, dass** das Aktivierungselement (5) als Trittmatte ausgebildet ist.

8. Anlage nach einem der Ansprüche 1 bis 6,
**dadurch gekennzeichnet, dass** das Aktivierungselement (5) als Bewegungsmelder ausgebildet ist.

9. Anlage nach einem der vorhergehenden Ansprüche,
**dadurch gekennzeichnet, dass** das Aktivierungselement (5) über eine Drahtverbindung mit dem Prozesselement (1) verbunden ist.

10. Anlage nach einem der Ansprüche 1 bis 8,
**dadurch gekennzeichnet, dass** das Aktivierungselement (5) über eine Funkverbindung mit dem Prozesselement (1) verbunden ist.

11. Anlage nach einem der vorhergehenden Ansprüche,
**dadurch gekennzeichnet, dass** das Aktivierungselement (5) mit einer speicherprogrammierbaren Steuerung des Prozesselements (1) verbunden ist.

12. Anlage nach einem der vorhergehenden Ansprüche,
**dadurch gekennzeichnet, dass** ein Deaktivierungselement (7) zur ferngesteuerten erneuten Aktivierung der Bildschirmschonfunktion vorgesehen ist.

## Claims

1. System with at least one automatically controlled process element, in particular automatically controlled process system, having at least one screen for displaying status or operating data of the process element, the displays of the one or more screens being interrupted on a time basis by a screen saver function,
**characterized in that** an activation element (5) for remote-controlled cancellation of the screen saver function of the one or more screens assigned to the activation element is provided, the activation element having a sensing range and becoming active when a person is detected in said sensing range.

2. System according to Claim 1,
**characterised in that** a plurality of screens are provided and an activation element (5) is provided for cancelling the screen saver function of a plurality of screens (4).

3. System according to Claim 2,
**characterised in that** an activation element (5) is provided for time-staggered cancellation of the screen saver functions of a plurality of screens (4).

4. System according to one of Claims 2 or 3,
**characterised in that** a switching element (6) connected to the activation element (5) is provided e.g. for determining the number of screens (4) whose screen saver function is cancelled.

5. System according to one of the preceding Claims,
**characterised in that** a plurality of activation elements (5) are provided.

6. System according to Claim 5,
**characterised in that** a plurality of activation elements (5) are provided for cancelling the screen saver functions of screens (4) combined into groups.

7. System according to one of the preceding claims,
**characterised in that** the activation element (5) is implemented as a floor mat.

8. System according to one of Claims 1 to 6,
**characterised in that** the activation element (5) is implemented as a motion sensor.

9. System according to one of the preceding Claims,
**characterised in that** the activation element (5) is connected to the process element (1) via a wired connection.

10. System according to one of Claims 1 to 8,
**characterised in that** the activation element (5) is connected to the process element (1) via a radio connection.

11. System according to one of the preceding Claims,
**characterised in that** the activation element (5) is connected to a stored program controller of the process element (1).

12. System according to one of the preceding Claims,
**characterised in that** a deactivation element (7) is provided for remote-controlled reactivation of the screen saver function.

## Revendications

1. Installation comportant au moins un élément de processus commandé automatiquement, notamment une installation de processus commandée automatiquement, avec au moins un écran pour l'affichage de données d'état ou de fonctionnement de l'élément de processus, l'affichage du ou des écrans étant interrompu temporairement par une fonction d'économiseur d'écran,
**caractérisée par le fait qu'**un élément d'activation (5) est prévu pour l'annulation commandée à distance de la fonction d'économiseur d'écran du ou des écrans associés à l'élément d'activation, l'élément d'activation comportant une zone de couverture et devenant actif lorsqu'une personne est détectée dans la zone de couverture.

2. Installation selon la revendication 1,
**caractérisée par le fait que** plusieurs écrans sont prévus et qu'un élément d'activation (5) est prévu pour l'annulation des fonctions d'économiseur d'écran de plusieurs écrans (4).

3. installation selon la revendication 2,
**caractérisée par le fait qu'**un élément d'activation (5) est prévu pour l'annulation décalée temporellement des fonctions d'économiseur d'écran de plusieurs écrans (4).

4. Installation selon l'une des revendications 2 ou 3,
**caractérisée par le fait qu'**un élément de commutation (6) relié à l'élément d'activation (5) est prévu par exemple pour spécifier le nombre des écrans (4) dont la fonction d'économiseur d'écran est annulée.

5. Installation selon l'une des revendications précédentes,
**caractérisée par le fait que** plusieurs éléments d'activation (5) sont prévus.

6. Installation selon la revendication 5,
**caractérisée par le fait que** plusieurs éléments d'activation (5) sont prévus pour l'annulation des fonctions d'économiseur d'écran d'écrans (4) réunis en groupes.

7. Installation selon l'une des revendications précédentes,
**caractérisée par le fait que** l'élément d'activation (5) est conçu comme un tapis sur lequel on passe.

8. Installation selon l'une des revendications 1 à 6,
**caractérisée par le fait que** l'élément d'activation (5) est conçu comme un détecteur de mouvement.

9. Installation selon l'une des revendications précédentes,
**caractérisée par le fait que** l'élément d'activation (5) est relié par l'intermédiaire d'une liaison par fil à l'élément de processus (1).

10. Installation selon l'une des revendications 1 à 8,
**caractérisée par le fait que** l'élément d'activation (5) est relié par l'intermédiaire d'une liaison par radio à l'élément de processus (1).

11. Installation selon l'une des revendications précédentes,
**caractérisée par le fait que** l'élément d'activation (5) est relié à une commande par programme enregistré de l'élément de processus (1 ).

12. Installation selon l'une des revendications précédentes,
**caractérisée par le fait qu'**un élément de désactivation (7) est prévu pour la réactivation commandée à distance de la fonction d'économiseur d'écran.
